# EUROPEAN PATENT APPLICATION

(11) **EP 2 846 153 A1**
(43) Date of publication of application: **11.03.2015**
(21) Application number: 13781007.3
(22) Date of filing: 23.04.2013
(51) Int. Cl.: G01N 21/65

(54) **OPTICAL DEVICE AND DETECTION APPARATUS**

(30) Priority: 27.04.2012 JP 2012102917
(71) Applicant: Seiko Epson Corporation, Shinjuku-ku Tokyo 163-0811 (JP)
(72) Inventor: YAMADA, Akiko, Suwa-shi, Nagano 392-8502 (JP); YAMADA, Kohei, Suwa-shi, Nagano 392-8502 (JP)
(74) Representative: Hoffmann Eitle
(86) International application number: PCT/JP2013/002723
(87) International publication number: WO 2013/161272

(57) **Abstract**

There are provided an optical device and a detection device capable of improving the sensitivity by forming an organic molecular film on a dielectric body between metal nanostructures, and forming the metal nanostructures having a shape easy for target molecules to enter with the distance between the metal nanostructures narrowed.

The optical device 10 has a substrate 12 having a dielectric body 16 on a surface, a metal fine structure 20 formed of a plurality of metal nanostructures 18 formed on the dielectric body, and an organic molecular film 30 formed on the dielectric body between the plurality of metal nanostructures, and adapted to capture target molecule. The plurality of metal nanostructures each has a diameter in a planar view of 1 through 500 nm, and has a distance between the metal nanostructures adjacent to each other of no smaller than 0.1 nm and smaller than 10 nm. The plurality of metal nanostructures has the distance W2 between the metal nanostructures adjacent to each other at a second height position H2 from the surface of the dielectric body larger than a first distance W1 between the metal nanostructures adjacent to each other at a first height position H1 (H2>H1) from the surface of the dielectric body.

## Description

### Technical Field

The present invention relates to an optical device, a detection device, and so on.

### Background Art

In recent years, demand for sensor chips used for, for example, medical diagnostics or inspections of food and drink has increased, and further, development of sensor chips high in sensitivity and small in size has been demanded. In order to meet such a demand, a variety of types of sensor chips such as a sensor chip using an electrochemical process have been studied. Among these, sensor chips using a spectroscopic analysis using a surface plasmon resonance (SPR: Surface Plasmon Resonance), in particular, surface enhanced Raman scattering (SERS: Surface Enhanced Raman Scattering) have been receiving increasing attention on the ground of possibility of integration, low cost, applicability in all measurement environments, and so on.

Here, the surface plasmon denotes a vibration mode of an electron wave causing coupling with light under a boundary condition unique to the surface. As a method of exciting the surface plasmon, there are cited a method of carving a diffraction grating on a metal surface to couple the light and the plasmon, and a method of using an evanescent wave. For example, as the sensor using the SPR, there is cited a sensor configured including a total reflection prism, and a metal film having contact with a target substance formed on the surface of the prism. Due to such a configuration, there is detected presence or absence of adsorption of the target substance such as presence or absence of adsorption of an antigen in an antigen-antibody reaction.

Incidentally, the propagating surface plasmon exists on the metal surface on the one hand, the localized surface plasmon exists on the metal nano-particle on the other hand. It is known that in the case in which the localized surface plasmon, namely the surface plasmon localized on the metal fine structure of the surface, is excited, a remarkably enhanced electric field is induced.

Further, it is known that in the case in which the enhanced electric field formed by the localized surface plasmon resonance (LSPR: Localized Surface Plasmon Resonance) using the metal nanostructure is irradiated with the Raman scattered light, the Raman scattered light is enhanced due to the surface enhanced Raman scattering phenomena, and a sensitive sensor (detection device) is proposed. By using this principle, it becomes possible to detect a variety of minute amounts of substances.

The enhanced electric field is strong in the periphery of the metal nanostructure, in particular in the gap between the metal nanostructures adjacent to each other, and it is necessary to make the target molecules in the fluid sample remain in the gap between the metal nanostructures. For example, in PTL 1 and NPL 1, a self-assembled monolayer (SAM) is formed on the metal surface of the sensor chip.

### Citation List

### Patent Literature

PTL 1: JP-A-2009-222401

### Non Patent Literature

NPL 1: P. Freunscht et al., "Surface-enhanced Raman spectroscopy of trans-stilbene adsorbed on platinum or self-assembled monolayer-modified silver film over nanosphere surfaces," Chemical Physics Letters, 281(1997), 372-378

### Summary of Invention

### Technical Problem

In NPL 1, alkanethiol is used as an SAM material. The SAM of this type of thiol (SH group) compound is specifically combined with the metal surface. Therefore, in the case of forming the metal nanostructure on a dielectric body, this type of SAM is not formed between the metal nanostructures adjacent to each other.

On the other hand, since the enhanced electric field is strong in intensity between the metal nanostructures adjacent to each other, the SAM made of the thiol compound cannot adsorb the target substance existing between the metal nanostructures where the enhanced electric field is strong.

In contrast, PTL 1 discloses a silane coupling agent as the SAM material, and the silane coupling agent is formed on the substrate between the metal nanostructures. Here, the intensity of the enhanced electric field is inversely proportional to the gap between the metal nanostructures. It should be noted that if the distance between the metal nanostructures is narrowed, the probability that the target molecules enter the space between the metal nanostructures is lowered. In PTL 1, the metal nanostructure has a rectangular cross-sectional surface, and the distance between the metal nanostructures is arranged to be equal to or larger than 10 nm. If the distance between the metal nanostructures is as large as described above, sufficient improvement in excessiveness cannot be expected.

Some aspects of the invention have an object of providing an optical device and a detection device capable of improving the sensitivity by forming an organic molecular film on a dielectric body between the metal nanostructures, and forming metal nanostructures easy for the target molecules to enter with the distance between the metal nanostructures narrowed.

### Solution to Problem

(1) An aspect of the invention relates to an optical device including
   a substrate having a dielectric body on a surface,
   a plurality of metal nanostructures formed on the dielectric body, and
   an organic molecular film formed on the dielectric body between the metal nanostructures, and adapted to adsorb a target molecule,
   wherein the plurality of metal nanostructures each has a diameter in a planar view of 1 through 500 nm, and has a distance between the metal nanostructures adjacent to each other of no smaller than 0.1 nm and smaller than 10 nm, and
   the plurality of metal nanostructures has a first height position taking a surface of the dielectric body as an origin and a second height position having a height from the origin higher than the first height position, and a distance between the metal nanostructures adjacent to each other at the second height position is longer than a distance at the first height position.

According to the aspect of the invention, if the plurality of metal nanostructures has the diameter in a planar view of 1 through 500 nm, the enhanced electric field is formed between the metal nanostructures adjacent to each other. Moreover, since the distance between the metal nanostructures adjacent to each other is as narrow as no smaller than 0.1 nm and smaller than 10 nm, the intensity of the enhanced electric field inversely proportional to the distance between the metal nanostructures can be increased. The organic molecular film is formed on the dielectric body between the metal nanostructures which is a hot site where an enhanced magnetic field is formed. Since the plurality of metal nanostructures is formed to have the distance between the metal nanostructures adjacent to each other so as to have a wide entrance on the entrance side of the target molecule, the probability that the target molecule is adsorbed on the organic molecular film can be increased while narrowing the distance between the metal nanostructures to increase the enhanced electric field. Therefore, the target molecule can be captured in the hot site, and a signal sensitivity can be improved. Moreover, if the organic molecular film is provided to the metal nanostructure, the distance between the target molecule adsorbed on the organic molecular film and the metal nanostructure increases depending on the thickness of the organic molecular film. Since the signal sensitivity is inversely proportional to the distance between the target molecule and the metal nanostructure, it results that the signal sensitivity is lowered depending on the thickness of the organic molecular film. In this regard, if the organic molecular film is formed on the dielectric body between the metal nanostructures, the distance between the target molecule adsorbed on the organic molecular film and the metal nanostructure does not depend on the thickness of the organic molecular film.

(2) In an aspect of the invention, it is possible to provide the plurality of metal nanostructures with a shape with which the distance between the metal nanostructures adjacent to each other becomes the narrowest between two points where the metal nanostructures adjacent to each other respectively have contact with the dielectric body.

The target molecule adsorbed at a position where the distance from the surface of the metal nanostructure becomes the shortest is the target molecule adsorbed on the organic molecular film in the vicinity of the position where the metal nanostructure has contact with the dielectric body. Since the enhanced electric field at that position can be increased, the signal sensitivity can further be enhanced.

(3) According to an aspect of the invention, it is possible for the plurality of metal nanostructures to have the height from the surface of the dielectric body smaller than the diameter of the metal nanostructures.

By making the height of the plurality of metal nanostructures from the surface of the dielectric body smaller than the diameter of the metal nanostructure, the target molecule captured between the metal nanostructures having a wide entrance becomes easy to be adsorbed on the organic molecular film formed on the dielectric body between the metal nanostructures with relatively low height.

(4) In an aspect of the invention, the thickness of the organic molecular film can be set to 0.1 through 5 nm.

Since the shorter the distance from the dielectric surface is, the narrower the distance between the metal nanostructures adjacent to each other is, the shorter the distance from the dielectric surface is, the stronger the enhanced electric field is. In order to adsorb the target molecule in the position where the enhanced electric field is strong, the thickness of the organic molecular film is set to 0.1 through 5 nm.

(5) In an aspect of the invention, the organic molecular film can be formed of organic silane molecules.

Silane is a collective term of those having four functional groups bonded to Si (silicon), and the organic silane molecule is one having four functional groups bonded to Si at least one of which is an organic group. The organic group of the organic silane molecule adsorbs the target molecule, and the other functional groups react with the OH group provided to the dielectric surface, and are immobilized on the dielectric surface.

(6) In an aspect of the invention, it is possible that the organic silane molecule has a hydrophobic group, and the target molecule has a hydrophobic group.

The target molecule having the hydrophobic group (e.g. , a methyl group or a phenyl group) can adsorb to the organic silane molecule having the hydrophobic group as the organic group.

(7) In an aspect of the invention, it is possible that the organic silane molecule has a hydrophilic group, and the target molecule has a hydrophilic group.

The target molecule having the hydrophilic group (e.g., a hydroxyl group, an amide group, or polyethylene glycol) can adsorb to the organic silane molecule having the hydrophilic group as the organic group.

(8) Another aspect of the invention relates to a detection device including
a light source,
the optical device described in any one of Claims 1 through 5 in the appended claims, and entered by light from the light source, and
a light detector adapted to detect light emitted from the optical device.

The detection device can improve the detection sensitivity of the target molecule.

### Brief Description of Drawings

[Fig. 1] Fig. 1 is a cross-sectional view of an optical device according to an embodiment of the invention.
[Fig. 2] Figs. 2A through 2D are explanatory diagrams of the detection principle of surface enhanced Raman light.
[Fig. 3] Fig. 3 is a characteristic diagram showing a relationship between an inter-metal nanostructure distance and an SERS intensity.
[Fig. 4] Fig. 4 is a characteristic diagram showing a relationship between a distance from a metal surface to a target molecule and the SERS intensity.
[Fig. 5] Fig. 5 is a diagram for explaining a distance from the target molecule to be captured by an organic molecular film according to a comparative example to the surface of the metal nanostructure.
[Fig. 6] Fig. 6 is a diagram for explaining a distance from the target molecule to be captured by an organic molecular film according to the present embodiment to the surface of the metal nanostructure.
[Fig. 7] Figs. 7A through 7C are diagrams each showing an example of an organic silane molecule as the organic molecular film.
[Fig. 8] Fig. 8 is a diagram showing the hydrolysis of the organic silane molecule of Fig. 7C.
[Fig. 9] Fig. 9 is a diagram showing a state in which a silanol group of the organic silane molecule shown in Fig. 8 is immobilized on the surface of the dielectric body by dehydration synthesis with a hydroxyl group on the surface of the dielectric body.
[Fig. 10] Figs. 10A, 10B are diagrams showing examples of organic silane molecules having a methyl group and a phenyl group as the organic group, respectively.
[Fig. 11] Fig. 11 is a diagram showing a reaction in which HDMS (hexamethyldisilazane) as still another example of the organic silane molecule is immobilized to the dielectric body.
[Fig. 12] Fig. 12 is a diagram showing a metal nanostructure according to a comparative example.
[Fig. 13] Fig. 13 is a diagram showing a metal nanostructure according to the present embodiment.
[Fig. 14] Fig. 14 is a diagram showing the shape of the metal nanostructure according to the present embodiment in an enlarged manner.
[Fig. 15] Fig. 15 is a characteristic diagram showing a relationship between a distance of the target molecule from a substrate surface and the SERS intensity.
[Fig. 16] Fig. 16 is a diagram showing a gas phase method for forming an organic molecular film.
[Fig. 17] Fig. 17 is a characteristic diagram showing the SERS signal measured using an optical device before and after forming the organic molecular film.
[Fig. 18] Fig. 18 is a diagram showing an overall configuration of a detection device according to a second embodiment of the invention.
[Fig. 19] Fig. 19 is a control system block diagram of the detection device shown in Fig. 18.
[Fig. 20] Fig. 20 is a diagram showing a light source of the detection device shown in Fig. 18.
[Fig. 21] Fig. 21 is a diagram showing two resonators and a distortion adding section provided to the light source shown in Fig. 18.
[Fig. 22] Fig. 22 is a diagram showing a modified example of the basic structure of the optical device shown in Fig. 1.
[Fig. 23] Fig. 23 is a diagram showing a modified example adopting a metal island structure as the metal nanostructure.

### Description of Embodiments

Hereinafter, preferred embodiments of the invention will be explained in detail. It should be noted that the present embodiments explained below do not unreasonably limit the content of the invention as set forth in the appended claims, and all of the constituents set forth in the present embodiments are not necessarily essential as means of the invention for solving the problems.

### 1. First Embodiment

### 1.1. Structure of Optical Device

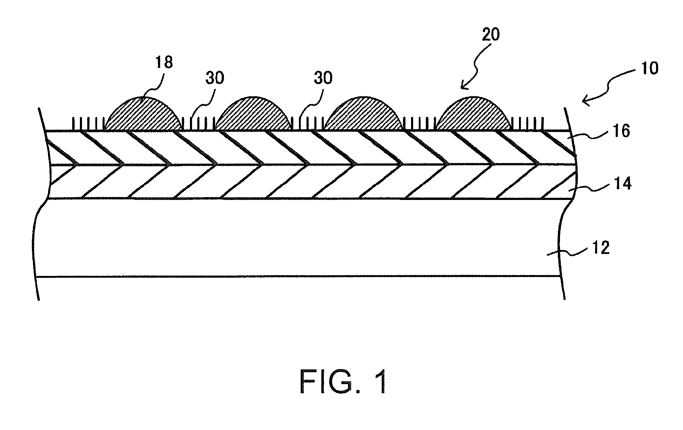

The optical device 10 shown in Fig. 1 has a dielectric body 16 on the outermost surface of a substrate 12. It is also possible that the substrate 12 itself is a dielectric body such as an oxide, and in such a case, the substrate 12 can be formed of glass, mica, SiO₂, SnO₂, GeO₂, ZrO₂, TiO₂, Al₂O₃, PZT, and so on. It is also possible to form the dielectric body 16 described above on the substrate 12 made of a material other than the dielectric body. In the present embodiment, a metal (conductor) film 14 can be provided between, for example, the glass substrate 12 and the dielectric body 16.

On the dielectric body 16, there are formed metal fine structure 20 formed of a plurality of metal nanostructures 18. The plurality of metal nanostructures 18 can be arranged with a period P. The period P is not limited to a constant value, but a random arrangement with the smallest period P is also possible. The metal nanostructures 18 can be arranged one-dimensionally, or can be arranged two-dimensionally.

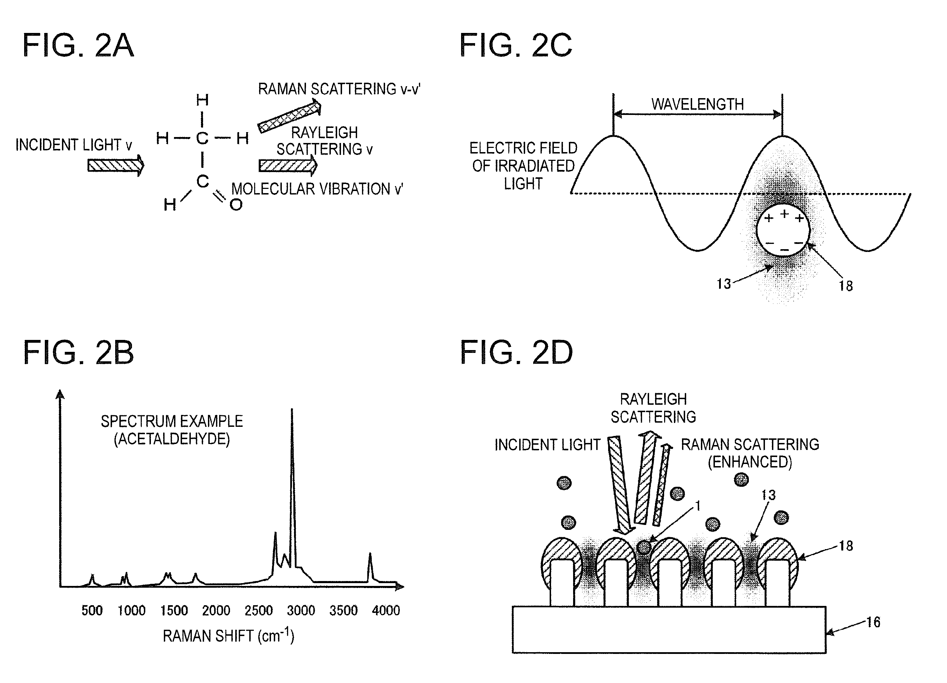

The metal nanostructures 18 are metal particles in the order of several nanometers and smaller than the wavelength of incident light, and have a size (a particle size) in a planar view of 1 through 500 nm. The incident light denotes excitation light for exciting the surface plasmon localized on the metal fine structure of the surface. As the metal nanostructures 18, there is used, for example, gold (Au), silver (Ag), copper (Cu), aluminum (Al), palladium (Pd), nickel (Ni) , platinum (Pt) , molybdenum (Mo), or chromium (Cr) , or an alloy or a complex of any of these metals. The metal nanostructures 18 can be formed by coating projections of an insulating body (see Fig. 2D).

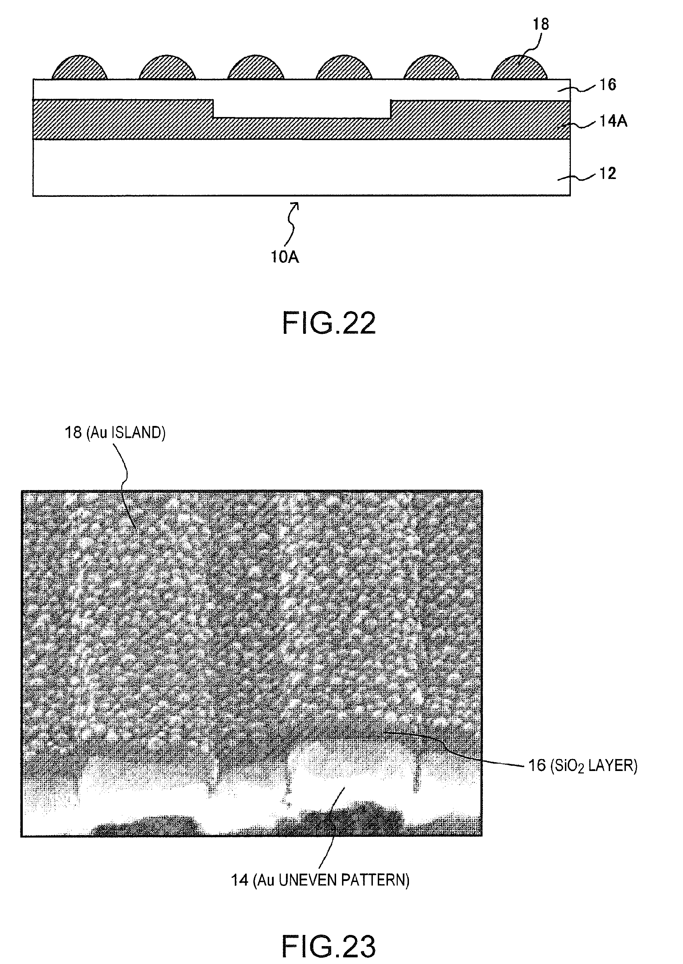

The metal film 14 is formed as an enhancement structure for the propagating plasmon, and a flat film (Fig. 1) , a metal diffraction grating (see Figs. 22 and 23 described later) with periodical uneven pattern, and so on are suitable therefor. In Fig. 1, there is shown an example of forming the metal film 14 made of gold (Au) using a vacuum evaporation method or a sputtering method. As the thickness of the Au film, 10 nm through several tens nm is desirable. As types of the metal, gold (Au), silver (Ag), copper (Cu), aluminum (Al), platinum (Pt) , nickel (Ni) , palladium (Pd), tungsten (W) , rhodium (Rh) , ruthenium (Ru), and so on are suitable.

As the dielectric body 16 formed on the metal film 14, an oxide such as SiO₂, Al₂O₃, or TiO₂ is suitable, and the thickness thereof is preferably about 10 nm through 1000 nm.

### 1.2. Light Detection Principle

Explanatory diagrams of the detection principle of the Raman scattering light as one example of the light detection principle reflecting the target molecule will be shown using Figs. 2A through 2D. As shown in Fig. 2A, the target molecule 1 as the detection object to be adsorbed by the optical device 10 is irradiated with the incident light (vibration frequency v). In general, a most part of the incident light is scattered as the Rayleigh scattering light, and the vibration frequency v or the wavelength of the Rayleigh scattering light does not vary with respect to the incident light. A part of the incident light is scattered as the Raman scattering light, and the vibration frequency (v-v' and v+v') or the wavelength of the Raman scattering light reflects the vibration frequency v' (molecular vibration) of the target molecule 1. In other words, the Raman scattering light is light reflecting the target molecule 1 as the test object. Although the part of the incident light vibrates the target molecule 1 to thereby lose the energy, the vibration energy of the target molecule 1 is added to the vibration energy or the light energy of the Raman scattering light, in some cases. Such a shift (v') in the vibration frequency as described above is called a Raman shift.

Fig. 2B shows an example of acetaldehyde as fingerprint spectrum unique to the target molecule. Due to the fingerprint spectrum, the substance thus detected can be identified as acetaldehyde. However, the Raman scattering light is extremely faint, and therefore, it is difficult to detect the substance existing in only minute amounts.

As shown in Fig. 2D, in the region entered by the incident light, an enhanced electric field 13 is formed in a gap between the metal nanostructures 18 adjacent to each other. In particular, as shown in Fig. 2C, in the case of irradiating the metal nanostructures 18 smaller than the wavelength λ of the incident light with the incident light, the electric field of the incident light affects the free electrons existing on the surface of the metal nanostructures 18 to cause a resonance. Thus, the electric dipoles due to the free electrons are excited in the metal nanostructures 18, and the enhanced electric field 13 stronger than the electric field of the incident light is formed. This is also called a localized surface plasmon resonance (LSPR: Localized Surface Plasmon Resonance). This phenomenon is a phenomenon unique to the metal nanostructures having projections of 1 through 500 nm smaller than the wavelength of the incident light.

In the present embodiment, both of the localized surface plasmon and the propagating surface plasmon can be used together with each other. The propagating surface plasmon can be formed by the propagation structure constituted by the metal film 14. For example, as disclosed in Japanese Patent Application 2011-139526 by the applicant of the present patent application, in the case in which the metal film 14 is an uneven grating surface, the surface plasmon is generated when the light enters the uneven portion of the grating. If the polarization direction of the incident light is made perpendicular to the groove direction of the grating, the vibration of the electromagnetic wave is excited due to the vibration of the free electrons in the metal grating. Since the vibration of the electromagnetic wave affects the vibration of the free electrons, there is formed the surface plasmon polariton as a system obtained by combining the vibrations of the both parties with each other. It should be noted that even if the metal film 14 is flat, the propagating surface plasmon is generated. The surface plasmon polariton propagates along the interface between the metal film 14 and the dielectric body 16, and further enhances the enhanced electric field 13.

### 1.3. Optical Device Having Organic Molecular Film

As shown in Fig. 1, in the present embodiment, the optical device 10 has organic molecular film 30 on the dielectric body 16 between the metal nanostructures 18 adjacent to each other. The organic molecular film 30 is an adsorption film for adsorbing (capturing) the target molecule, and can be formed of, for example, a self-assembled monolayer (SAM).

In the present embodiment, the organic molecular film 30 is formed on the dielectric body 16 between the metal nanostructures 18, and the distance between the metal nanostructures 18 is no smaller than 0.1 nm and smaller than 10 nm.

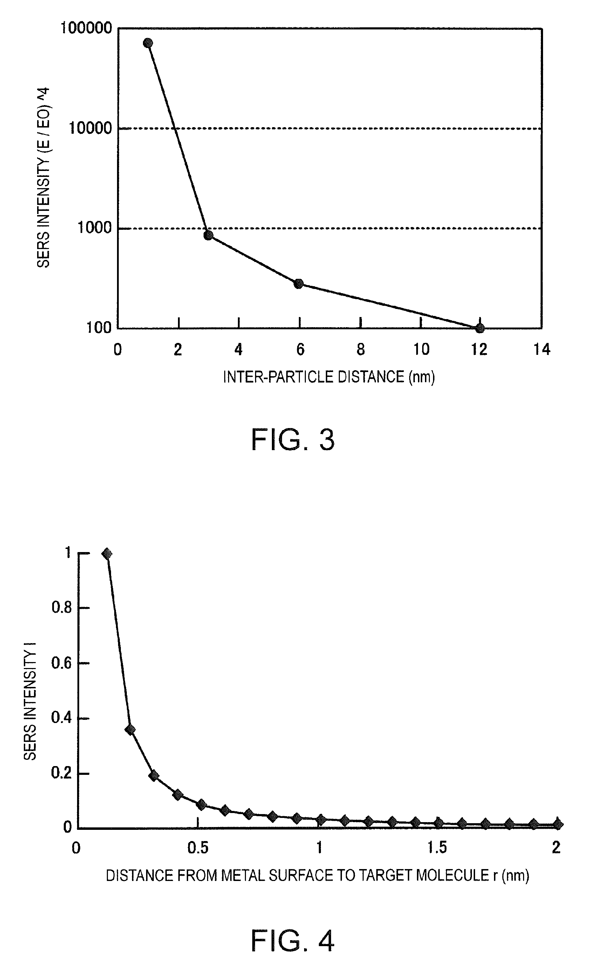

Fig. 3 shows a result of an FDTD (finite-difference time-domain method) simulation assuming that Ag with a diameter of 15 nm is used as the metal nanostructure, the distance between the metal nanostructures 18 is represented by the horizontal axis, and the vertical axis represents the SERS intensity. As shown in Fig. 3, if the distance between the metal nanostructures 18 is narrowed, the SERS intensity increases. The reason for this is that the narrower the distance between the metal nanostructures 18 is made, the stronger the enhanced electric field generated between the metal nanostructures 18 can be made.

Therefore, in the present embodiment, a range no smaller than 0.1 and smaller than 10 nm, which is not disclosed in PTL 1, is adopted as the distance between the metal nanostructures 18 as the range with a high SERS intensity based on the simulation result of Fig. 3.

Then, assuming that the SERS intensity is I, and the distance from the surface of the metal nanostructure 18 to the target molecule 1 is r, a relationship between the SERS intensity I and the distance r becomes as shown in Fig. 4. As is obvious from Fig. 4, the closer the distance r from the surface of the metal nanostructure 18 to the target molecule is, the higher the SERS intensity I becomes, and the SERS intensity I becomes remarkably low as the distance r increases.

Therefore, the closer the target molecule 1 is to the surface of the metal nanostructure 18, the higher the sensitivity becomes as a sensor for detecting the target molecule.

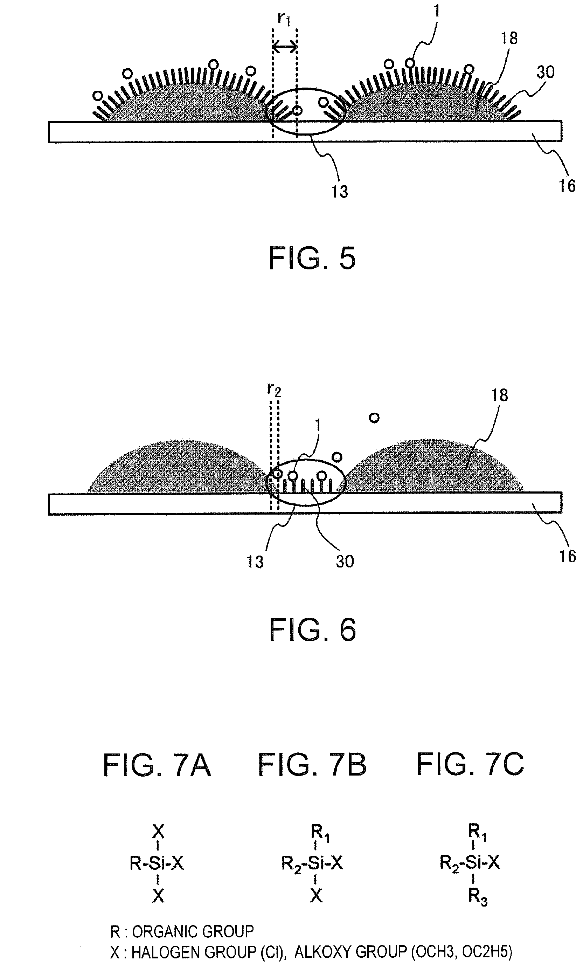

Incidentally, as shown in Fig. 5, in a comparative example of forming the SAM 30 on the surface of the metal nanostructure 18, it results that the target molecule 1 is adsorbed distant from the surface of the metal nanostructure 18 as much as a distance r1 depending on the length of the SAM 30.

In contrast, the present embodiment having the SAM 30 formed on the dielectric body 16 between the metal nanostructures 18 is shown in Fig. 6. As shown in Fig. 6, a distance r2 from the surface of the metal nanostructure 18 to the target molecule 1 does not depend on the length of the SAM 30, and the target molecule 1 can be made closer to the surface of the metal nanostructure 18 (r2<r1). Therefore, it is understood that in the optical device according to the present embodiment shown in Fig. 6, the intensity of the light (the Raman scattering light) reflecting the target molecule 1 becomes higher than in the comparative example shown in Fig. 5, and the detection capability of the sensor is improved.

### 1.4. Organic Molecular Film

The organic molecular film 30 used for the present embodiment is formed mostly on the surface of the dielectric body 16 rather than the surface of the metal nanostructure 18. The purpose of using the organic molecular film 30 is to make the target molecule 1, which fails to be adsorbed on the surface of the metal nanostructure 18, be the detection object.

As such an organic molecular film 30, there can be cited an organic silane molecule. Silane is a collective term of those having four functional groups bonded to Si (silicon). The organic silane molecule is one having four functional groups bonded to Si at least one of which is an organic group (e.g., an alkyl group, a phenyl group, alkene, and a polyethylene glycol group). The target molecule is adsorbed (captured) on the organic group.

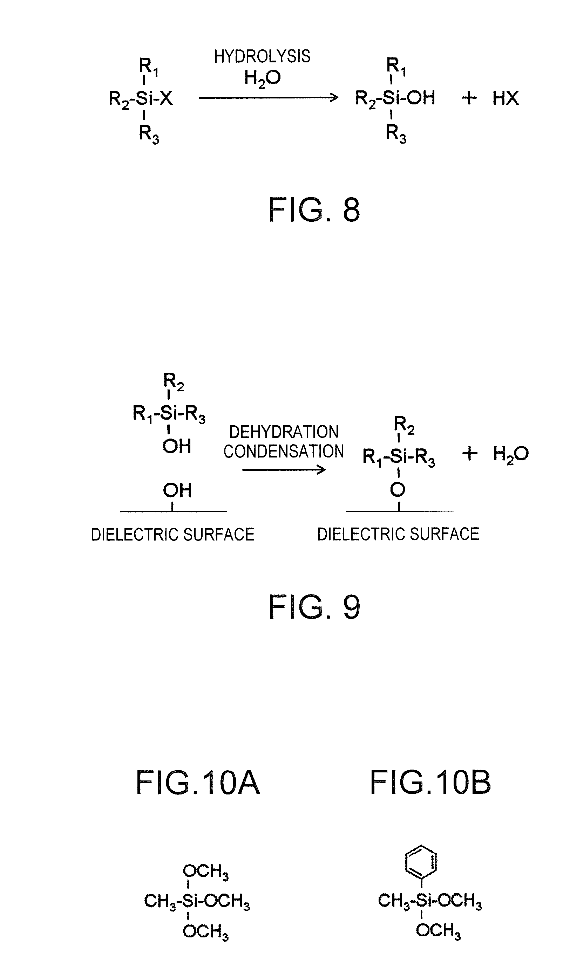

Among these, as shown in Figs. 7A, 7B, and 7C, as a functional group X other than the organic groups R, R1-R3, there can be cited what has a halogen group (Cl) and an alkoxy group (OCH₃, OC₂H₅) bonded to each other. The functional group X (the halogen group or the alkoxy group) of the organic silane molecule is hydrolyzed as shown in Fig. 8, and a silanol group Si-OH is generated. As shown in Fig. 9, the silanol group Si-OH is immobilized on the surface of the dielectric body 16 due to dehydration condensation with a hydroxyl group OH on the surface of the dielectric body 16 shown in Fig. 1. As described above, the organic silane molecule for generating the silanol group Si-OH due to hydrolysis is referred to as a silane coupling agent.

As the organic silane molecule having the alkoxy group as the functional group, there can be cited methyltrimethoxysilane CH₃Si(OCH₃)₃ shown in Fig. 10A, or dimethoxymethylphenylsilane CH₃C₆H₅Si (OCH₃)₂ shown in Fig. 10B.

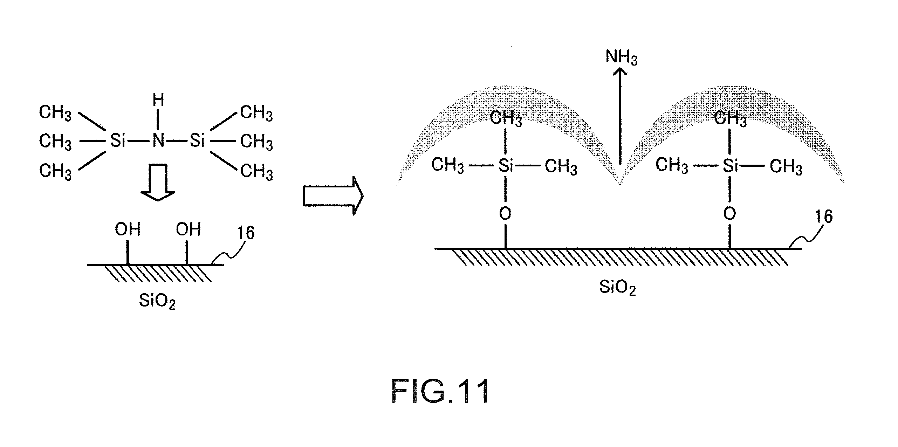

Further, as shown in Fig. 11, also in the organic silane molecule such as HDMS (hexamethyldisilazane), the functional group N-H reacts with a hydroxyl group OH on the surface of the dielectric body 16 shown in Fig. 1, generates ammonia NH₃, and is immobilized on the surface of the dielectric body 16.

It should be noted that even if the outermost surface of the metal nanostructure 18 is naturally oxidized, the surface of, for example, silver oxide (Ag₂O) does not generally become an OH group, and therefore, does not react with the organic silane molecule.

The organic molecule film 30 can also be used selectively in accordance with the type of the target molecule 1. For example, for the target molecule 1 having a hydrophobic group (e.g., a methyl group or a phenyl group), the organic silane molecule (e.g., decyltrimethoxysilane, phenyltriethoxysilane) having a hydrophobic group as the organic group can be used.

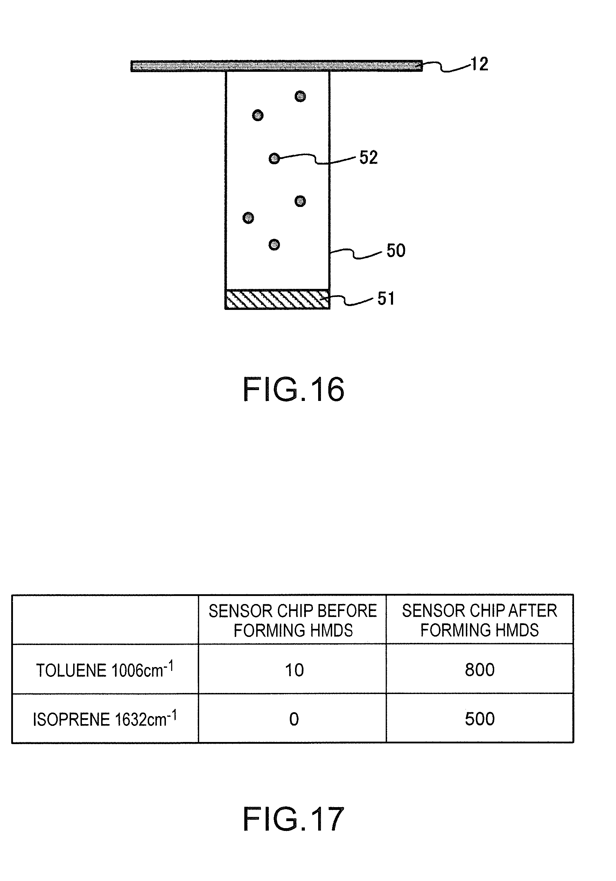

Alternatively, for the target molecule 1 having a hydrophilic group (e.g., a group including a hydroxyl group, an amide group, or polyethylene glycol), the organic silane molecule (e.g., 3-aminopropyl trimethoxysilane) having a hydrophilic group as the organic group can be used. This is because the hydrophobic group as the organic group of the organic silane molecule is easy to be bonded to the hydrophobic group of the target molecule 1, and the hydrophilic group as the organic group of the organic silane molecule is easy to be bonded to the hydrophilic group of the target molecule 1. It should be noted that toluene and isoprene described later in Fig. 17 are examples of the target molecule having the hydrophobic group.

### 1.5. Width of Entrance Between Metal Nanostructures

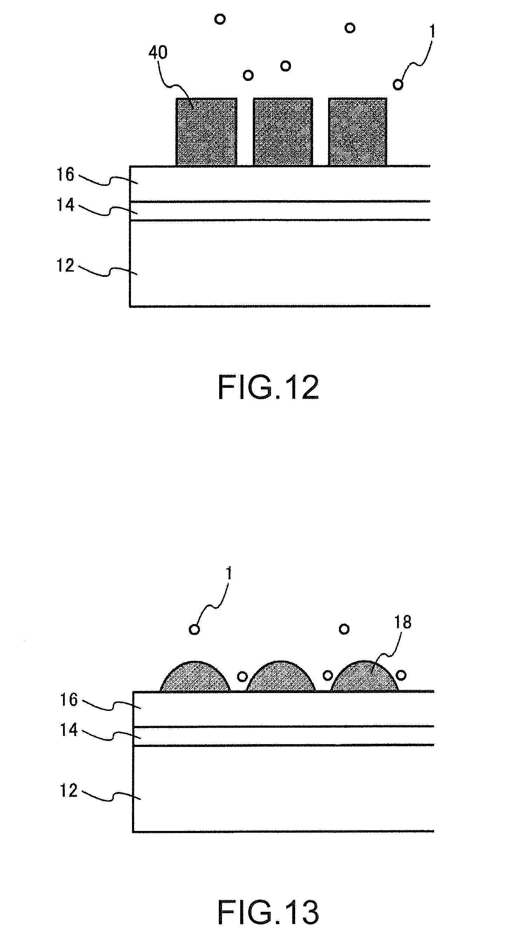

Figs. 12 and 13 show an optical device with the distance between the metal nanostructures narrowed. Fig. 12 shows a comparative example in which metal nanostructures 40 are each provided with a rectangular cross-sectional shape. As shown in Fig. 12, the nanostructures 40 having the rectangular cross-sectional shape are provided with a constant distance between the metal nanostructures 40, and the entrance is narrow.

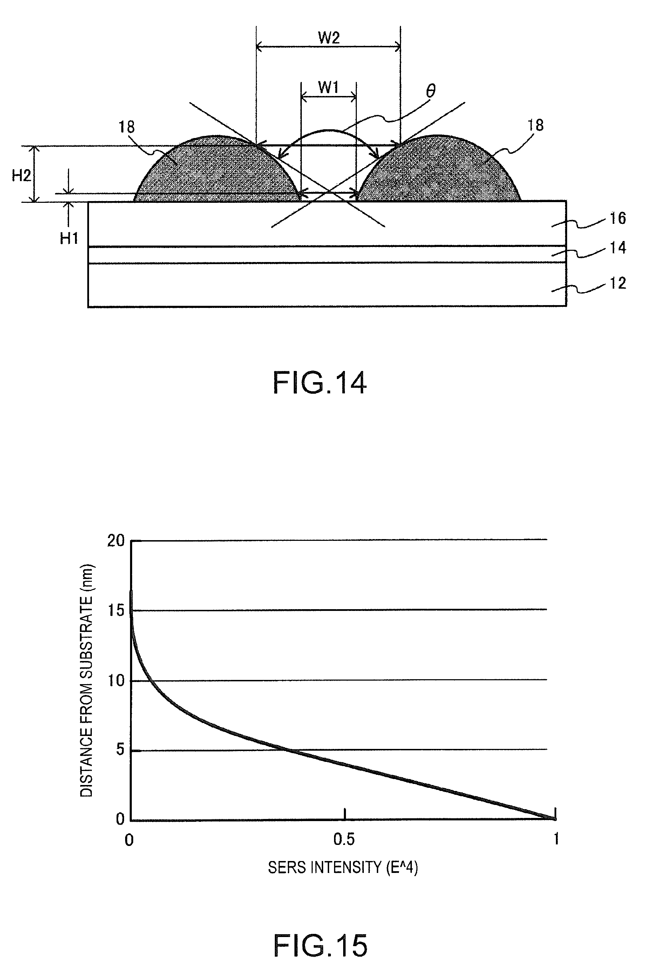

Fig. 13 shows the shapes of the metal nanostructures 18 according to the present embodiment. As shown in Fig. 14, which is obtained by enlarging Fig. 13, a relationship between a first width W1 between the metal nanostructures 18 adjacent to each other at a first height position H1 from the surface of the dielectric body 16 and a second width W2 between the metal nanostructures 18 adjacent to each other at a second height position H2 (H2>H1) from the surface of the dielectric body 16 fulfills W2>W1.

In particular, in Figs. 13 and 14, the entrance between the metal nanostructures 18 is enlarged. In particular, the metal nanostructures 18 shown in Figs. 13 and 14 have the shapes with which the distance between the metal nanostructures 18 adjacent to each other becomes the smallest between two points where the metal nanostructures 18 adjacent to each other respectively have contact with the dielectric body 16. As is obvious from Fig. 6, the target molecule 1 captured at the position where the distance r2 from the surface of the metal nanostructure 18 becomes the shortest is the target molecule 1 captured by the organic molecular film 30 in the vicinity of the position where the metal nanostructure 18 has contact with the dielectric body 16. In the case in which the distance between the metal nanostructures 18 adjacent to each other is the narrowest, the enhanced electric field becomes the strongest, and in the case in which the distance r2 between the surface of the metal nanostructure 18 and the target molecule 1 is short, the signal intensity becomes the highest, in fact.

In Figs. 13 and 14 , the contour of the metal nanostructure 18 is curved to be a circular arc. The curved shape is not limited to what has a single curvature radius, but can also be a shape obtained by linking circular arcs with a plurality of curvature radii with each other. Instead of these, it is also possible to provide the metal nanostructure 18 with a trapezoidal shape to enlarge the entrance using the slopes facing each other of the metal nanostructures 18 adjacent to each other. It should be noted that assuming the crossing angle between a tangential line having contact with the contour of the circular arc shape of the metal nanostructure 18 on the right hand shown in Fig. 14 at a predetermined height position (e.g., H2) and a tangential line having contact with the circular arc shape of the metal nanostructure 18 on the left hand at the same height position H2 as θ, the larger the crossing angle θ is, the wider the entrance becomes.

### 1.6. Height of Metal Nanostructures

In the comparative example shown in Fig. 12, not only that the entrance is narrow, the height of the metal nanostructures 40 from the surface of the dielectric body 16 is also high. Therefore, not only that the probability that the target molecule 1 enters the space between the metal nanostructures 40 is low, the possibility for the target molecule 1 having entered the space between the metal nanostructures 40 to be adsorbed on the SAM (not shown in Fig. 12) formed on the dielectric body 16 is also low.

In the structure shown in Figs. 13 and 14, it is arranged that the height of the metal nanostructures 18 from the surface of the dielectric body 16 is lowered. Thus, not only that the probability that the target molecule 1 enters the space between the metal nanostructures 18 with the wide entrance increases, the possibility for the target molecule 1 having entered the space between the metal nanostructures 18 to be adsorbed on the SAM 30 (not shown in Figs. 13 and 14) formed on the dielectric body 16 also increases. Due to this fact, in the present embodiment, the height of the metal nanostructures 18 from the surface of the dielectric body 16 can be made smaller than the diameter of the metal nanostructure.

### 1.7. Thickness of Organic Molecular Film

In the structure shown in Figs. 13 and 14, the distance between the metal nanostructures 18 adjacent to each other is the narrowest at the points where the metal nanostructures 18 have contact with the dielectric body 16. Therefore, as shown in Fig. 15, which is the result of the FDTD simulation using the Ag particles with the particle size of 50 nm, the SERS intensity is the highest on the dielectric body 16, and the SERS intensity decreases as the distance from the dielectric body 16 increases. Therefore, the smaller the film thickness of the organic molecular film 30 to which the target molecule 1 is adsorbed is, the better. Due to this fact, the thickness of the organic molecular film 30 can be set to 0.1 through 5 nm. It should be noted that since the attenuation of the SERS intensity due to the distance from the dielectric body 16 is sufficiently small compared to the attenuation of the SERS intensity due to the distance from the surface of the metal nanostructures 18 shown in Fig. 4, the fact remains that it is more advantageous to form the SAM 30 on the dielectric body 16 than the case of forming the SAM 30 on the surface of the metal nanostructures 18.

### 1.8. Example

Silver (Ag) as the material of the metal nanostructures 18 was evaporated 10 nm on the glass substrate 12 to thereby form a metal fine structure 20 using an island structure having the silver metal nanostructures 18 with a diameter of about 70 nm, a height of about 20 nm, and a distance between the metal nanostructures of about 5 nm on the glass substrate 12. Subsequently, HMDS (hexamethyldisilazane) as the SAM forming solution material 51 was poured into a container 50 of 6 ml shown in Fig. 16 as much as 1 ml, then kept standing under room temperature and atmospheric pressure for two hours, and then a SAM film material 52 in a gaseous state was attached on the dielectric body 16 between the metal nanostructures 18 to thereby form the HMDS SAM as the organic molecular film 30.

Fig. 17 shows a result of detection of a gas molecule of toluene and isoprene by the SERS using two types of optical devices before and after forming the organic molecular film 30 as the sensor chip. Fig. 17 is a result of the measurement in which light with a wavelength of 632.8 nm is made to enter the optical device from a laser source of 2 mW, and the exposure time is set to 60 seconds.

As shown in Fig. 17, in the optical device provided with the organic molecular film 30, the peak intensity (the number of counts) of the Raman spectrum (toluene: 1006 cm⁻¹; isoprene: 1632 cm⁻¹) characteristic for each of the target molecules is increased. Therefore, it becomes possible to detect the target molecule, the SERS detection of which has been unachievable only with the metal fine structure not provided with the organic molecular film 30, using the optical device according to the present embodiment.

### 2. Second Embodiment

### 2.1. Overall Configuration of Detection Device

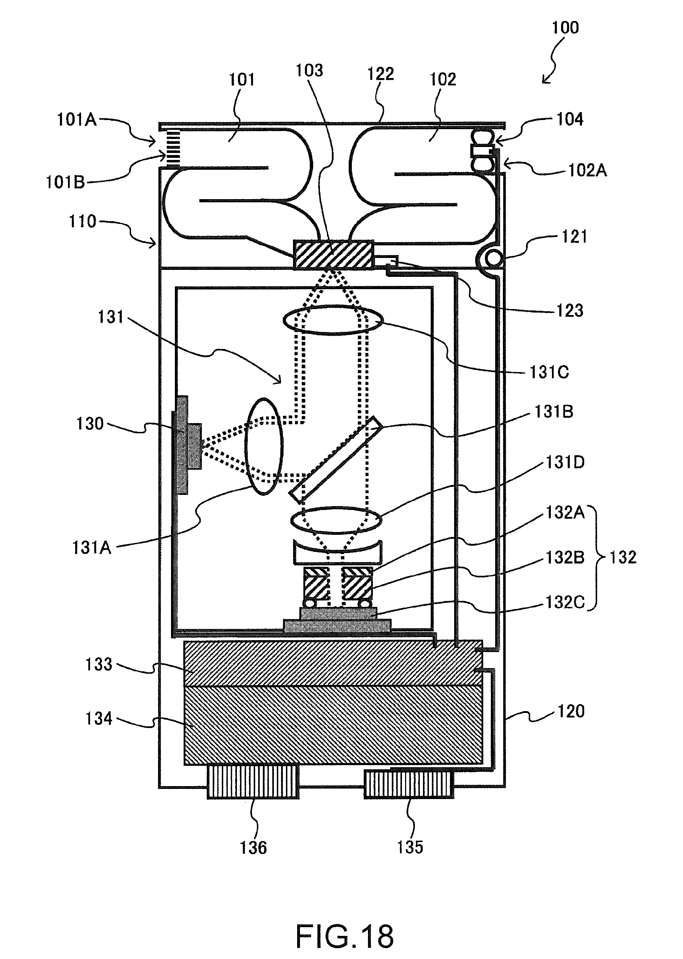

Then, an overall configuration of the detection device will be explained as a second embodiment. Fig. 18 shows a specific configuration example of the detection device according to the present embodiment. A detection device 100 shown in Fig. 18 has a sample supply channel 101 having a suction port 101A and a dust filter 101B, a sample discharge channel 102 having a discharge port 102A, and an optical device unit 110 provided with an optical device (a sensor chip) 103 having the structure shown in Fig. 4, and so on. Light enters the optical device 103. A housing 120 of the detection device 100 is provided with a sensor cover 122 which can be opened and closed due to a hinge section 121. The optical device unit 110 is disposed inside the sensor cover 122 so as to be detached from the housing 120. The mounted/unmounted state of the optical device unit 110 can be detected by a sensor detector 123.

The sample supply channel 101 and the sample discharge channel 102 are formed in a bypassed manner to have a structure difficult for the external light to enter.

It should be noted that the shape of the channels for sucking in and discharging the fluid sample is considered so that the external light is prevented from entering the sensor and that the fluid resistance to the fluid sample decreases. By arranging that the external light is prevented from entering, the light, which is other than the Raman scattering light and becomes noise, is not input, and the S/N ratio of a signal is improved. It becomes necessary to select the material, color, and surface shape of the material forming the channels so as to be difficult to reflect the light in addition to the shapes of the channels. Further, by arranging that the fluid resistance to the fluid sample decreases, a large amount of fluid sample in the vicinity of this device can be collected, and the detection with sensitivity becomes possible. By forming these channels so as to have a smooth shape by eliminating the corners as much as possible, accumulation in the corners is eliminated. Further, as a negative pressure generation section 103 provided to the fluid discharge channel 102, it is also necessary to select a fan or a pump having static pressure and air volume corresponding to the channel resistance.

Inside the housing 120, there are disposed a light source 130, an optical system 131, a light detection section 132, a signal processing/control section 133, and a power supply section 134.

In Fig. 18, the light source 130 is, for example, a laser, and a vertical cavity surface emitting laser can preferably be used therefor from the viewpoint of miniaturization, but is not limited thereto.

The light from the light source 130 is collimated by a collimator lens 131A constituting the optical system 131. It is also possible to dispose a polarization control element on the downstream of the collimator lens 131A to thereby convert the light into a linearly polarized light. It should be noted that if the surface emission laser is adopted as the light source 130, and thus the light with the linearly polarized light can be emitted, the polarization control element can be eliminated.

The light collimated by the collimator lens 131A is guided toward the optical device 103 by a half mirror (a dichroic mirror) 131B, then converged by an objective lens 131C, and then enters the optical device 103. The Rayleigh scattering light and the Raman scattering light from the optical device 103 pass through the objective lens 131C, and is then guided toward the light detection section 100 by the half mirror 131B.

The Rayleigh scattering light and the Raman scattering light from the optical device 103 are converged by a collecting lens 131D, and are then input to the light detection section 132. In the light detection section 132, firstly, an optical filter 132A is reached. The optical filter 32A (e.g. , a notch filter) takes out the Raman scattering light. The Raman scattering light is further received by a light receiving element 132C via a spectroscope 132B. The spectroscope 132B is formed of, for example, an etalon using the Fabry-Perot resonance, and can be made to have a variable pass wavelength band. The wavelength of the light passing through the spectroscope 132B can be controlled (selected) by the signal processing/control circuit 133. The Raman spectrum unique to the target molecule 1 can be obtained by the light receiving element 132C, and the Raman spectrum thus obtained and data held previously are compared with each other for matching to thereby make it possible to identify the target molecule 1.

The power supply section 134 supplies the light source 130, the light detection section 132, the signal processing/control section 133, the fan 104, and so on with the power from a power supply connection section 135. The power supply section 134 can be formed of, for example, a secondary battery, and can also be formed of a primary battery, an AC adapter, and so on. A communication connection section 136 is connected to the signal processing/control section 133, and transmits data, control signals, and so on to the signal processing/control section 133.

In the example shown in Fig. 18, the signal processing/control section 133 can send commands to the light detection section 132, the fan 104, and so on except the light source 130 shown in Fig. 18. Further, the signal processing/control section 1330 is capable of performing a spectroscopic analysis using the Raman spectrum, and the signal processing/control section 133 is also capable of identifying the target molecule 1. It should be noted that the signal processing/control section 133 can transmit the detection result using the Raman scattering light, the spectroscopic analysis result using the Raman spectrum, and so on to, for example, external equipment (not shown) connected to the communication connection section 136.

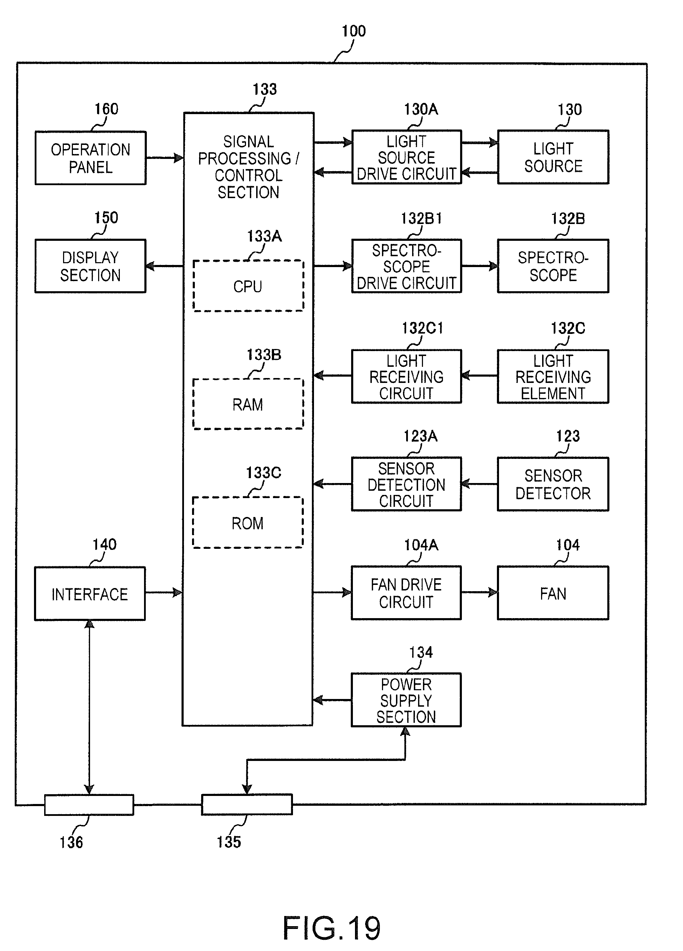

Fig. 19 is a control system block diagram of the detection device 100 shown in Fig. 18. As shown in Fig. 19, the detection device 100 can further include, for example, an interface 140, a display section 150, an operation panel 160, and so on. Further, the signal processing/control section 133 shown in Fig. 19 can include, for example, a CPU (Central Processing Unit) 133A, a RAM (Random Access Memory) 133B, a ROM (Read Only Memory) 133C, and so on as a control section.

Further, the detection device 100 can include a light source drive circuit 130A for driving each section shown in Fig. 18, a spectroscope drive circuit 132B1, a sensor detection circuit 123A, a light receiving circuit 132C1, a fan drive circuit 104A, and so on.

### 2.2. Light Source

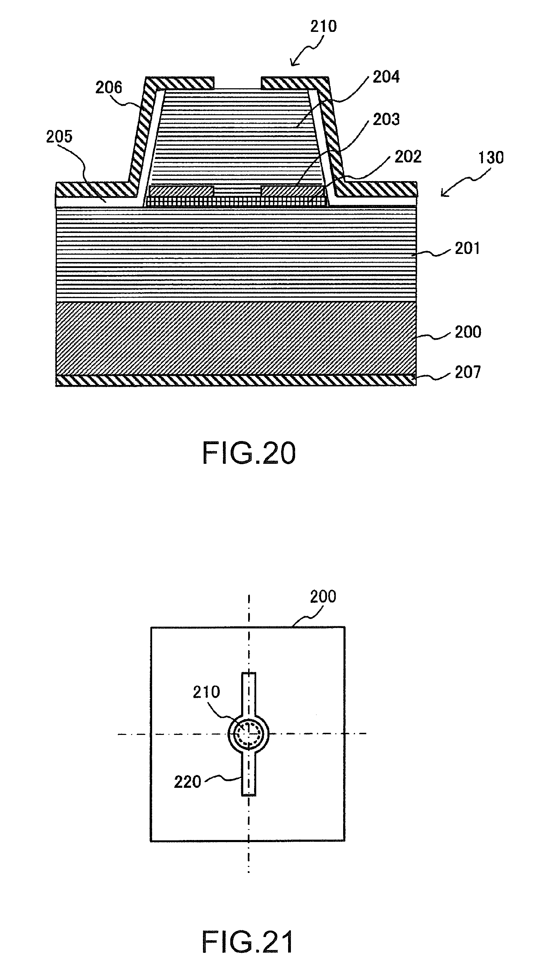

Fig. 20 shows a structural example of the vertical cavity surface emitting laser as the light source 130 shown in Fig. 18. In the example shown in Fig. 20, an n-type DBR (Diffracted Bragg Reflector) layer 201 is formed on an n-type GaAs substrate 200. In a central portion of the n-type DBR (Diffracted Bragg Reflector) layer 201, there are disposed an active layer 202 and an oxidization constriction layer 203. A p-type DBR layer 204 is disposed on the oxidization constriction layer 203. In the peripheral portion of these, an electrode 206 is formed via an insulating layer 205. An electrode 207 is also formed on a reverse side of the n-type GaAs substrate 200. In the example shown in Fig. 20, the active layer 202 intervenes between the n-type DBR layer 201 and the p-type DBR layer 204, and a vertical cavity 210 in which the light generated in the active layer 202 resonates between the n-type DBR layer 201 and the p-type DBR layer 204 is formed. It should be noted that the vertical cavity surface emitting laser is not limited to the example shown in Fig. 20, but the oxidization constriction layer 203, for example, can be eliminated.

The light source 130 shown in Fig. 18 is preferably the vertical cavity surface emitting laser (the surface emitting laser in a broad sense) for resonating the light in a vertical direction with respect to the substrate surface and capable of emitting the light in a direction (the optical axis of the light source) perpendicular to the substrate surface. By using the vertical cavity surface emitting laser, it is possible to constitute the light source which is monochromatic (single-wavelength) and is a linearly polarized light. Further, the vertical cavity surface emitting laser can be miniaturized, and is suitable to be incorporated in a portable detection device. Further, due to the structure of the vertical cavity surface emitting laser, the formation of the resonator 210 and the testing of the laser characteristics can be achieved without cleaving the substrate in the manufacturing process, which is suitable for the production on a large scale. Further, since the vertical cavity surface emitting laser can be manufactured at a relatively low cost compared to other semiconductor lasers, and it is also possible to provide, for example, a two-dimensional array type vertical cavity surface emitting laser. In addition, the threshold current of the vertical cavity surface emitting laser is low, and therefore, the power consumption of the detection device 100 can be reduced. Further, the high-speed modulation of the vertical cavity surface emitting laser can be achieved at a low current, and the range of the characteristic variation with respect to the temperature variation of the vertical cavity surface emitting laser is small, and therefore, the temperature control section of the vertical cavity surface emitting laser can be simplified.

Here, it has been difficult to control the polarization plane of the laser beam emitted from the surface emitting semiconductor laser in the related art to the specific orientation, and there has been a problem that the polarization plane fluctuates depending on the light output and the environmental temperature, or causes switching. In order to overcame the above, it is possible to dispose a distortion adding section 220 adjacent to the resonator 210 shown in Fig. 21 as described in Japanese Patent No. 3,482,824. The distortion adding section 220 applies an anisotropic stress to the resonator 210 to distort to thereby cause the polarization dependency of the birefringence and gain inside the resonator. By disposing the distortion adding section 220 in the periphery of the resonator 210, stable plane-polarized light control becomes possible.

It should be noted that although the present embodiment is hereinabove explained in detail, it should easily be understood by those skilled in the art that it is possible to make a variety of modifications not substantially departing from the novel matters and the advantages of the invention. Therefore, such modified examples should be included in the scope of the invention. For example, a term described at least once with a different term having a broader sense or the same meaning in the specification or the accompanying drawings can be replaced with the different term in any part of the specification or the accompanying drawings. Further, the configurations and the operations of the optical device, the detection device, the analysis device, and so on are not limited to those explained in the present embodiment, but can be put into practice in variously modified forms.

Fig. 22 shows an example in which, for example, the flat metal film 14 shown in Fig. 1 is replaced with a metal film 14A having the uneven pattern. This structure is a structure disclosed in Japanese Patent Application 2011-139526 by the applicant of the present patent application as described above. The period of the uneven pattern of the metal film 14A is, for example, 10 or more times larger than the arrangement period of the metal nanostructures 18. If the metal film 14 has the uneven grating surface as described above, the surface plasmon can be generated when the light enters the uneven portion of the grating, and the propagating plasmon can be enhanced.

Fig. 23 shows what has the metal nanostructures 18 shown in Fig. 22 formed on an SiO₂ layer (a dielectric layer) 16 having a thickness of, for example, 40 nm as metal islands made of Ag. It should be noted that although the surface of the dielectric body 16 is planarized in Fig. 22, the planarization is not performed in Fig. 23, and the uneven pattern of the metal film 14 made of, for example, Au is reflected on the surface of the dielectric body 16. In other words, the surface of the dielectric body 16 can be planarized, but is not required to be planarized. There is a variation in size of the Ag particles shown in Fig. 23 within a range of 20 through 80 nm, and moreover, there is no periodicity. The metal islands formed as described above have the outer surface curved by the surface tension, and therefore, the cross-sectional shape of the metal nanostructure 18 shown in Fig. 1 can be obtained.

### Reference Signs List

- 1: target molecule
- 12: optical device (sensor chip)
- 14: metal film
- 16: dielectric body
- 18: metal nanostructure
- 20: metal fine structure
- 30: organic molecular film (SAM)
- 100: detection device
- 130: light source
- 132: light detector

## Claims

1. An optical device **characterized by** comprising:
a substrate having a dielectric body on a surface;
a plurality of metal nanostructures formed on the dielectric body; and
an organic molecular film formed on the dielectric body between the metal nanostructures, and adapted to adsorb a target molecule,
and **characterized in that** the plurality of metal nanostructures each has a diameter in a planar view of 1 through 500 nm, and has a distance between the metal nanostructures adjacent to each other of no smaller than 0.1 nm and smaller than 10 nm, and
the plurality of metal nanostructures has a first height position taking a surface of the dielectric body as an origin and a second height position having a height from the origin higher than the first height position, and a distance between the metal nanostructures adjacent to each other at the second height position is longer than a distance at the first height position.

2. The optical device according to Claim 1, **characterized in that**
the plurality of metal nanostructures has a shape with which the distance between the metal nanostructures adjacent to each other becomes the narrowest between two points where the metal nanostructures adjacent to each other respectively have contact with the dielectric body.

3. The optical device according to one of Claims 1 and 2, **characterized in that**
the plurality of metal nanostructures has a height from the surface of the dielectric body smaller than the diameter of each of the plurality of metal nanostructures.

4. The optical device according to any one of Claims 1 through 3, **characterized in that**
a thickness of the organic molecular film is in a range of 0.1 through 5 nm.

5. The optical device according to any one of Claims 1 through 4, **characterized in that**
the organic molecular film is formed of organic silane molecules.

6. The optical device according to Claim 5, **characterized in that**
the organic silane molecule has a hydrophobic group, and the target molecule has a hydrophobic group.

7. The optical device according to Claim 5, **characterized in that**
the organic molecule has a hydrophilic group, and the target molecule has a hydrophilic group.

8. A detection device **characterized by** comprising:
a light source;
the optical device according to any one of Claims 1 through 5, and entered by light from the light source; and
a light detector adapted to detect light emitted from the optical device.
